# FASCICULE DE BREVET EUROPEEN

(11) **EP 0 954 977 B1**
(45) Date de publication et mention de la délivrance du brevet: **13.04.2005**
(21) Numéro de dépôt: 99201203.9
(22) Date de dépôt: 19.04.1999
(51) Int. Cl.: A23G 9/02, A23G 3/00, A23G 9/28, A21D 13/08

(54) **Article de confiserie glacée composite et procédé de fabrication**
Komposit Eiskonfekt und Verfahren zur Herstellung
Composite ice confection and method of production

(30) Priorité: 08.05.1998 EP 98201460
(43) Date de publication de la demande: 10.11.1999
(73) Titulaire: SOCIETE DES PRODUITS NESTLE S.A., 1800 Vevey (CH)
(72) Inventeur: Fournet, Alain, 75011 Paris (FR); Dufort, Christian, 60000 Beauvais (FR); Sunderland, Charles-Austin, 60000 Goincourt (FR)
(74) Mandataire: Archambault, Jean

(56) Documents cités:
- EP-A- 0 509 566
- WO-A-95/07025
- FR-A- 2 574 250
- FR-A- 2 680 635
- US-A- 3 655 402
- US-A- 4 275 082
- US-A- 4 293 572
- US-A- 4 910 030
- DATABASE WPI Section Ch, Week 8824 Derwent Publications Ltd., London, GB; Class D11, AN 88-166100 XP002080973 & JP 63 105632 A (NITTO CORN KK), 10 mai 1988 (1988-05-10)

## Description

L'invention se rapporte à un article de confiserie glacée composite comprenant une pâte fine cuite et une glace.

A titre d'exemple, les articles de confiserie glacée composites consistant en une glace associée à un biscuit ou une gaufrette croquante, notamment du type des gâteaux, barres et particulièrement des cônes, des cigares ou des sandwiches de gaufrette entourant une glace ou garnis de glace, doivent comprendre un système qui imperméabilise le biscuit ou la gaufrette de l'humidité provenant de la glace pour l'empêcher de perdre son caractère croquant, aussi bien à l'entreposage que lors de sa consommation.

Celà est réalisé habituellement en revêtant soit la surface du biscuit au contact de la glace, soit la glace elle-même, d'une composition grasse, par exemple de chocolat ou de couverture chocolatée. On peut par exemple selon EP-A-0023152, revêtir l'intérieur d'un cône en gaufrette d'une couche de couverture grasse liquide ayant les propriétés requises de fluidité et d'aptitude à l'étalement par pulvérisation, de manière à établir une barrière contre l'humidité provenant de la garniture de crème glacée.

Un autre procédé consiste, par exemple comme décrit dans FR-A- 2574250 à appliquer au rouleau une matière grasse liquide proche de son point de solidification sur une gaufrette cuite avant sa mise en forme.

Le but de l'invention est de fournir un article de confiserie glacée composite comprenant une pâte fine cuite et une garniture de glace, dans lequel la pâte fine cuite est à même de garder une texture particulièrement croustillante à l'entreposage à l'état congelé et à la consommation.

Le produit de confiserie ainsi que son procédé de fabrication sont définis dans les revendications.

L'article selon l'invention est caractérisé par le fait que la pâte fine cuite est constituée d'une superposition de couches très fines de pâte de type brick ou filo et de matière grasse appliquée sous forme liquide, avec ou sans addition d'une couche de sucre.

L'article comprend l'association de glace et de pâte fine cuite consistant en une superposition de couches de pâte très fines et de matière grasse avec ou sans une couche de sucre. La partie pâte de l'article a été mise en forme, cuite et recouverte d'une barrière à l'humidité, au moins sur les parties susceptibles d'être au contact de la glace.

Les couches de pâte très fines, d'épaisseur 0,2 à 1 mm peuvent être de la pâte brick ou de la pâte à filo, à strudel ou à baklava, ces trois dernières dénominations désignant en fait le même type de pâte et ne différant que par leur origine culturelle. Pour simplifier, on utilisera par la suite le terme "pâte à filo". La pâte à filo est utilisée couramment dans les pâtisseries de type oriental telles que, par exemple les baklavas. Une caractéristique importante de ce type de pâte est qu'elle ne contient pas de sucre dans sa composition elle-même.

Le terme de glace employé ici s'applique à toute confiserie glacée, notamment sorbet, "sherbet" ou glace au lait, glace à l'eau, crème glacée plus ou moins foisonnés. Un tel article peut comporter des inclusions, notamment en marbrures ou morceaux ou en feuillets minces, de sirop, de sucre cuit, de pâte de fruit, de marshmallow, de gommes, de fruits secs ou confits ou de confiserie de type nougat, truffe ou chocolat, le cas échéant aéré ou des ingrédients aromatisants, par exemple des épices, des alcools ou des liqueurs.

Pour fabriquer la pâte fine, on utilise des procédés de fabrication variés en fonction de la nature de la pâte fine utilisée. Ainsi, la pâte brick est cuite sur cylindre à partir d'une pâte liquide. La pâte à filo est pétrie, laminée puis séchée.
Dans les deux cas, on peut produire une bande continue de pâte que l'on peut découper à la forme souhaitée.

Pour réaliser la confection de la pâte fine, on réalise une succession de une à trois fois la séquence d'opérations suivantes:
- On applique une matière grasse liquide avec ou sans sucre, de préférence par pulvérisation sur la face supérieure du morceau et
- On plie le morceau sur lui-même, ou superpose les couches de pâte, de manière à emprisonner la matière grasse avec ou sans sucre, entre les couches de pâte.

On obtient ainsi de 2 à 10 couches de pâte, de préférence environ 6 couches.

On met ensuite le morceau de pâte fine en forme par enroulement sur lui-même ou par enroulement partiel autour d'un mandrin ou par emboutissage pour lui donner la forme souhaitée. Suivant la nature du mandrin, par exemple cylindrique de section circulaire, ovale, arrondie et applatie ou conique, on peut ainsi réaliser un cigare, une barquette, une galette ou un cône de section circulaire ou ovale. On peut réaliser une mise en forme par enroulement partiel, par exemple de morceaux en forme de galettes rondes pour les courber en forme de "taco". Par emboutissage, on peut par exemple former une coupelle ou une barquette servant de réceptacle pour la glace, en forme générale de demi-lune.

Une fois mis en forme, on peut appliquer une couche de sucre liquide sur la face extérieure du morceau de pâte, de préférence par pulvérisation.

On reprend ensuite le morceau de pâte imprégné sur un support permettant de maintenir sa forme, puis on le cuit sur son support à environ 160-200° C pendant environ 1 - 15 min. Durant cette cuisson, on rend la pâte croustillante et assure sa rigidité. On peut cuire le morceau de pâte entre deux éléments chauffés, par exemple entre une matrice femelle et un poinçon mâle.

Après refroidissement, par exemple à la température ambiante ou à une température inférieure, on pulvérise un film barrière à l'humidité, par exemple une composition grasse telle qu'un chocolat liquide ou un "compound" sur la partie susceptible d'être en contact avec la garniture de glace.

On garnit ensuite la pâte fine cuite avec la glace. On peut en variante enrober la garniture de glace d'un film barrière précédent et l'introduire dans la pâte fine cuite.

On peut également utiliser la pâte fine cuite comme composant d'un produit du type des gâteaux, des barres, des bouchées ou des bonbons glacés en association avec ou enrobés d'une couverture de chocolat ou de "compound".

L'article de confiserie glacée ainsi produit se distingue des produits connus par le type de pâte, à brick ou à filo en superposition de couches très fines, jamais utilisé auparavant en association avec la glace. Cette association lui procure une croustillance particulière durable, dans la mesure où l'article pâtissier résiste particulièrement bien à la reprise d'humidité au cours du temps de par sa constitution. L'article présente également un goût complexe, procurant des sensations organoleptiques nouvelles liées à l'association de la pâte particulière cuite et de la glace.

Les exemples ci-après illustrent l'invention. Dans ceux-ci, les parties et pourcentages sont pondéraux, sauf indication contraire.

### Exemple 1

On fabrique une pâte à filo à partir d'une pâte dont la composition est la suivante:

| Ingrédient | % |
|---|---|
| Farine de blé (extra forte, riche en gluten) | 67,8 |
| Eau | 27,4 |
| Huile | 2,7 |
| Sel | 1,4 |
| Gluten | 0,7 |

Dans cette formule, on peut ajouter des oeufs. On peut également y ajouter un agent aromatisant tel qu'une poudre de cacao.

On mélange les ingrédients dans un mélangeur (KEMPER) à vitesse lente pendant 1 min., puis à vitesse rapide pendant 4 min., jusqu'à obtenir une pâte cohésive lisse et élastique. On transfère ensuite la pâte dans un extrudeur (RADEMAKER BV) qui met la pâte sous forme de couche fine, on la lamine et on la sèche dans un sécheur à infra-rouges. On superpose ensuite la pâte en 6 couches avec une pulvérisation d'huile, de beurre avec ou sans une solution de sucre entre chaque couche, puis on découpe des morceaux d'épaisseur finale 0,3 mm et de forme souhaitable pour produire un cornet en forme de cône après enroulement.

On enroule alors la pâte autour d'un mandrin de forme conique avec recouvrement successif des couches. Après pulvérisation d'une solution concentrée de sucre sur sa face extérieure, on reprend le produit sur un support conique et on le cuit à 200° C pendant environ 5 min. Après refroidissement pendant 2 min., on démoule le cornet, on pulvérise du chocolat liquide de manière à revêtir sa surface intérieure et on le remplit de crème glacée à la vanille en finissant le remplissage par un décor en forme de flamme.

La pâte cuite a une belle couleur dorée et conserve intégralement ses qualités organoleptiques après entreposage à l'état congelé pendant plusieurs mois et en particulier sa croustillance.

### Exemple 2

On produit une pâte brick à partir d'une pâte liquide dont la composition est la suivante:

| Ingrédient | % |
|---|---|
| Farine de blé | 35,3 |
| Eau | 59,6 |
| Huile | 3,1 |
| Sel | 1 |
| Lécithine | 1 |

On disperse les ingrédients dans un Turbo mixer. On cuit ensuite la pâte liquide sur cylindres, dans un four à crêpes (SEP EGMO, Groupe Bastide) à 200° C sur le premier rouleau et 170° C sur le second rouleau, en dosant la pâte sur le premier rouleau de manière à former des crêpes rondes.

On badigeonne les crêpes avec une matière grasse liquide avec ou sans sirop de sucre et on les plie en deux. On replie ou on enroule les morceaux de pâte en couches successives autour d'un mandrin conique. On obtient ainsi une pâte fine comprenant 4 à 6 couches, de 0,2 à 1 mm d'épaisseur. Après cuisson de la pâte mise en forme à 200° C pendant 5 min., on obtient un cornet bien doré. On refroidit ensuite le cornet cuit pendant 2 min, et on le démoule. On pulvérise du chocolat liquide de manière à revêtir sa surface intérieure et on le remplit de crème glacée.

La pâte fine cuite a une belle couleur dorée et conserve intégralement ses qualités organoleptiques après entreposage à l'état congelé pendant plusieurs mois et en particulier sa croustillance.

### Exemple 3

On procède comme à l'exemple 2, mis à par le fait que, pour produire un cornet de pâte, on cuit la pâte fine à 200° C pendant 60 s dans un moule entre deux parties mâle et femelle.

## Revendications

1. Article de confiserie glacée composite comprenant une pâte fine cuite et une glace, **caractérisé par le fait que** la pâte fine cuite est constituée d'une superposition de couches de pâte très fines de type brick ou filo et de matière grasse appliquée à l'état liquide entre chacune des couches fines, avec ou non une couche de sucre.

2. Article selon la revendication 1, **caractérisé par le fait que** la pâte a une épaisseur de 0,2 à 1 mm et comprend 2 à 10 couches.

3. Article selon la revendication 1, **caractérisé par le fait que** la partie pâte de l'article a été mise en forme, cuite et recouverte d'une barrière à l'humidité, au moins sur les parties susceptibles d'être au contact de la glace.

4. Article selon la revendication 1, **caractérisé par le fait qu'**il se présente sous forme d'un cornet glacé formé par enroulement de la pâte fine sur un mandrin en forme de cône.

5. Article selon la revendication 1, **caractérisé par le fait qu'**il se présente sous forme de cigare, de taco, de coupelle, de galette ou de barquette servant de réceptacle pour la glace en forme générale de demi-lune.

6. Procédé de fabrication d'un article selon l'une des revendications 1 à 5, **caractérisé par le fait:**
**que** l'on produit un morceau de pâte de forme souhaitée,
**que** l'on réalise la superposition des couches du morceau de pâte par une séquence d'opérations successives suivantes:
- On applique une matière grasse liquide avec ou sans une solution de sucre, de préférence par pulvérisation sur la face supérieure du morceau et
- On plie le morceau sur lui-même de manière à emprisonner la matière grasse entre deux couches de pâte,
**que** l'on met ensuite le morceau de pâte fine en forme par enroulement sur lui-même ou par enroulement partiel autour d'un mandrin ou par emboutissage pour lui donner la forme souhaitée,
**que** l'on applique une couche de sucre liquide sur la face extérieure du morceau de pâte mise en forme,
**que** l'on reprend ensuite le morceau de pâte imprégné sur un support permettant de maintenir sa forme et
**qu'**on le cuit sur son support à environ 160-200° C pendant environ 1 - 15 min.

7. Procédé selon la revendication 6, **caractérisé par le fait que** l'on effectue la séquence d'opérations d'application de la matière grasse liquide avec ou sans une solution de sucre et de repli du morceau de pâte sur lui-même successivement 2 ou 3 fois.

8. Procédé selon la revendication 6, **caractérisé par le fait qu'**après cuisson, on refroidit le morceau de pâte formé et cuit, et que l'on pulvérise un film barrière à l'humidité, notamment une composition grasse telle qu'un chocolat liquide ou un "compound" sur la partie susceptible d'être en contact avec la garniture de glace.

9. Procédé selon la revendication 6, **caractérisé par le fait que** l'on garnit la pâte fine cuite avec de la glace.

## Patentansprüche

1. Komposit-Eissüßwarenprodukt mit dünnem, gebackenem Teig und Eis,
**dadurch gekennzeichnet,**
**dass** der dünne, gebackene Teig aus aufeinander angeordneten sehr dünnen Teigschichten des Typs "Brick" oder "Filo" sowie aus einem Fett, das in flüssigem Zustand mit oder ohne Zuckerschicht zwischen jeder der dünnen Teigschichten aufgebracht wird, gebildet wird.

2. Produkt nach Anspruch 1,
**dadurch gekennzeichnet,**
**dass** der Teig eine Stärke von 0,2 bis 1 mm hat und 2 bis 10 Schichten umfasst.

3. Produkt nach Anspruch 1,
**dadurch gekennzeichnet,**
**dass** der Teigteil des Produkts geformt, gebacken und zumindest an den Stellen, die in Berührung mit dem Eis kommen können, mit einer Feuchtigkeitssperrschicht überzogen wurde.

4. Produkt nach Anspruch 1,
**dadurch gekennzeichnet,**
**dass** es in Form einer Eistüte ausgeführt ist, die durch Wickeln des dünnen Teigs auf einem kegelförmigen Dom geformt wird.

5. Produkt nach Anspruch 1,
**dadurch gekennzeichnet,**
**dass** es in Zigarrenform, in Tütenform, in Becherform, in Pfannkuchenform oder Schiffchenform ausgeführt ist und damit als allgemein halboffener Behälter für das Eis dient.

6. Verfahren zur Herstellung eines Produkt nach einem der Ansprüche 1 bis 5,
**dadurch gekennzeichnet,**
**dass** ein Stück Teig in der gewünschten Form hergestellt wird, dass das Aufeinanderlegen der Schichten des Teigstücks in einer Aufeinanderfolge der folgenden Arbeitsvorgänge geschieht:
- Es wird ein flüssiges Fett mit oder ohne eine Zuckerlösung vorzugsweise durch Zerstäuben auf der Oberseite des Teigstücks aufgetragen, und
- Das Teigstück wird zusammengefaltet, so dass das Fett zwischen zwei Teigschichten eingeschlossen ist,
**dass** sodann das dünne Teigstück durch Aufrollen um sich selbst oder durch Teil-Aufrollen um einen Dom oder durch Tiefziehen in die gewünschte Form gebracht wird, dass eine flüssige Zuckerschicht auf die Außenseite des in Form gebrachten Teigstücks aufgetragen wird, dass sodann das undurchlässig gemachte Teigstück auf eine Halterung gesetzt wird, durch die seine Form beibehalten werden kann, und dass es auf seiner Halterung bei ungefähr 160 bis 200 °C ca. 1 bis 15 Minuten lang gebacken wird.

7. Verfahren nach Anspruch 6,
**dadurch gekennzeichnet,**
**dass** die Aufeinanderfolge der Arbeitsvorgänge des Auftragens des flüssigen Fetts mit oder ohne Zuckerlösung und des Zusammenfaltens des Teigstücks nacheinander 2 oder 3 Mal wiederholt durchgeführt wird.

8. Verfahren nach Anspruch 6,
**dadurch gekennzeichnet,**
**dass** das geformte und gebackene Teigstück abgekühlt wird, und dass ein Feuchtigkeitssperrfilm, insbesondere eine fetthaltige Zusammensetzung wie z. B. eine flüssige Schokolade oder ein "Verbundstoff` auf den Teil, der in Berührung mit der Eisfüllung kommen kann, aufgestäubt wird.

9. Verfahren nach Anspruch 6,
**dadurch gekennzeichnet,**
**dass** der dünne, gebackene Teig mit dem Eis gefüllt wird.

## Claims

1. Article of frozen confectionery comprising thin cooked pastry and an ice cream, **characterized in that** the thin cooked pastry consists of a superposition of very thin layers of pastry of the brick or filo type and fats applied in the liquid state between each of the thin layers, with or without a layer of sugar.

2. Article according to claim 1, **characterised in that** the pastry has a thickness of 0.2 to 1 mm and comprises 2 to 10 layers.

3. Article according to claim 1, **characterised in that** the pastry part of the article has been shaped, baked and covered with a moisture barrier, at least on the parts likely to be in contact with the ice cream.

4. Article according to claim 1, **characterised in that** it is in the form of an ice cream cornet formed by rolling the thin pastry onto a mandrel in the form of a cone.

5. Article according to claim 1, **characterised in that** it is in the form of a cigar, taco, cup, wafer or boat acting as a receptacle for the ice cream in the general form of a half-moon.

6. Method for producing an article according to one of claims 1 to 5, **characterised in that** :
a portion of pastry is produced in the desired shape,
the layers of the portion of pastry are superimposed by a sequence of the following successive operations :
- a liquid fat is applied with or without a sugar solution, preferably by spraying onto the upper face of the portion and
- the portion is folded on itself so as to trap the fat between two layers of pastry,
the portion of thin pastry is then formed by rolling it on itself or by partially rolling it around a mandrel or by stamping it to give it the required shape,
a layer of liquid sugar is applied to the outer face of the shaped portion of pastry,
the portion of impregnated pastry is then taken up on a support enabling its shape to be maintained and
it is baked on its support at approximately 160-200°C for approximately 1 - 15 min.

7. Method according to claim 6, **characterised in that** a sequence of operations of applying the liquid fat with or without a sugar solution and of folding the portion of pastry on itself successively is carried out two to three times.

8. Method according to claim 6, **characterised in that**, after baking, the portion of shaped and cooked pastry is cooled and a moisture barrier film is sprayed on, in particular a fat composition such as liquid chocolate or a "compound" on the part likely to be in contact with the ice cream filling.

9. Method according to claim 6, **characterised in that** the thin baked pastry is filled with ice cream.
